# EUROPEAN PATENT SPECIFICATION

(11) **EP 4 520 735 B1**
(45) Date of publication and mention of the grant of the patent: **21.01.2026**
(21) Application number: 24195833.9
(22) Date of filing: 22.08.2024
(51) Int. Cl.: C03B 37/029

(54) **OPTICAL FIBER DRAWING FURNACE AND OPTICAL FIBER DRAWING METHOD**
GLASFASERZIEHOFEN UND GLASFASERZIEHVERFAHREN
FOUR D'ÉTIRAGE DE FIBRE OPTIQUE ET PROCÉDÉ D'ÉTIRAGE DE FIBRE OPTIQUE

(30) Priority: 11.09.2023 CN 202311174864
(43) Date of publication of application: 12.03.2025
(73) Proprietor: Yangtze Optical Fibre and Cable Joint Stock Limited Company, East Lake High-tech Development Zone Wuhan Hubei 430073 (CN)
(72) Inventor: WANG, Tao, Wuhan, 430073 (CN); WANG, Yang, Wuhan, 430073 (CN); WANG, Ruichun, Wuhan, 430073 (CN); FANG, Dongquan, Wuhan, 430073 (CN)
(74) Representative: Lorenz Seidler Gossel Part. mbB

(56) References cited:
- CN-A- 112 592 048
- CN-U- 211 111 722

## Description

### TECHNICAL FIELD

The present invention relates to an optical fiber drawing furnace and an optical fiber drawing method, and belongs to the technical field of optical fiber manufacturing equipment.

### BACKGROUND

An optical fiber is formed by heating, melting and drawing an optical fiber preform in a drawing furnace. In the optical fiber drawing process, the preform is melted by inducting heat from a graphite heating body through a heater in the drawing furnace. Since a graphite piece is prone to reacting with oxygen at a high temperature and being burned, a furnace mouth of the drawing furnace is required to have good sealing performance to prolong the service life of the graphite piece. On the other hand, during drawing, a drawing furnace cavity is also required to be stably filled with an inert process gas through a gas ring structure provided at the furnace mouth, which can not only isolate the entry of outside air, but also fully guarantee the drawing quality of the optical fiber. The diameter of an existing optical fiber preform is increasing, and the diameter fluctuation of a single preform is increasing, which puts a higher requirement on the sealing of the drawing furnace. In addition, a single graphite gas ring structure is used as an existing drawing furnace gas ring structure to directly face the optical fiber preform. During drawing, since the preform will move down continuously and has a fluctuating outer diameter, a single graphite gas ring is prone to oxidizing and being burned at the furnace mouth, the burned graphite gas ring will affect the cleanliness of the surface of the preform and thus affect the strength of the optical fiber, and the surface of the graphite gas ring will be uneven, which affects the stability of a gas flow in the furnace, thereby affecting the machining quality of the optical fiber.

An existing sealing device has a simple structure and thus is poor in sealing effect, and especially for the production of a perform varying greatly in outer diameter, the drawing furnace is prone to blow-by; or the existing sealing device has an overcomplex structure and thus is inconvenient to operate; or the existing sealing device has an overlarge sealing height, which causes the preform to be drawn incompletely, resulting in a loss of raw materials; quality parameters such as optical fiber roundness are affected. Therefore it is necessary to design a set of drawing furnace gas ring structure and sealing device to isolate the interior of the body of the drawing furnace from the outside air. On the one hand, the stability of a process gas in the furnace can be guaranteed, and on the other hand, the graphite piece is protected from being in contact with the outside air and then oxidizing and being burned, thereby prolonging the service life. Furthermore, the graphite piece has a high cost, and therefore the prolonging of the service life of the graphite piece can also greatly reduce the production cost.

Further prior art is known from CN 112 592 048 A and CN 211 111 722 U.

### SUMMARY

The technical problem to be solved by the present invention is to provide an optical fiber drawing furnace and an optical fiber drawing method in response to the above defects in the prior art. The optical fiber drawing furnace not only has reasonable structural arrangement and good sealing performance, but also can effectively prolong the service life of a graphite piece and improve the drawing quality.

The technical solution proposed by the present invention to solve the problem raised above is as follows.

An optical fiber drawing furnace includes a furnace body. An up-down through graphite center pipe is mounted in a middle of the furnace body, and an insulating layer and a heating coil are provided on a periphery of the graphite center pipe. An upper end of the graphite center pipe is connected to an upper furnace mouth, and a lower end of the graphite center pipe is connected to a downwards-shrinking lower furnace mouth. A protective gas ring structure is mounted on the upper furnace mouth, and a furnace mouth sealing device is equipped on the protective gas ring structure. The protective gas ring structure includes a metal flange mounted on the upper furnace mouth, an upper end of the metal flange is equipped with a metal gas intake ring, an annular gas intake cavity is formed between the metal flange and the metal gas intake ring, and a graphite-glass composite gas ring is mounted on inner faces of metal flange and an the metal gas intake ring opposite to the annular gas intake cavity.

According to a preferred embodiment, the furnace mouth sealing device is a glass ring quartz wool floating sealing device.

According to the present invention, the graphite-glass composite gas ring includes a graphite gas ring in close fit with an inner hole of the metal flange, circumferentially spaced radial gas intake holes are formed in a periphery of an upper end of the graphite gas ring corresponding to the annular gas intake cavity, an insertion-type glass gas guide ring is equipped in an inner hole of the graphite gas ring corresponding to the radial gas intake holes, and a periphery of an upper end of the insertion-type glass gas guide ring fits with an inner face of an upper end of the metal gas intake ring.

According to a preferred embodiment, a peripheral face of the insertion-type glass gas guide ring maintains a gap with the inner hole of the graphite gas ring and downwards extends by a distance to form an annular gas gap.

According to a preferred embodiment, circumferentially and uniformly spaced radial gas intake holes are formed in the periphery of the upper end of the graphite gas ring, the radial gas intake holes are downwards tilting and radially deflecting gas intake holes, and a protective gas layer that rotates downwards and wraps an optical fiber preform is formed during gas intake.

According to a preferred embodiment, the radial gas intake holes downwards tilt by an angle α of 10°-40° and radially deflect (towards the right or left) by an angle β of 15°-45°.

According to a preferred embodiment, the radial gas intake holes have a hole diameter of 1.5-3 mm, and the number of the circumferentially and uniformly distributed gas intake holes is 20-50.

According to a preferred embodiment, a lower end of the graphite gas ring downwards extends by a distance, with an axial direction being staggered with the graphite center pipe and a periphery fitting with an inner hole of the graphite center pipe.

According to a preferred embodiment, the glass ring quartz wool floating sealing device includes a glass sealing holder mounted at an upper end of the metal gas intake ring, an annular sealing groove provided in an inner hole of the glass sealing holder is filled with a sealing quartz wool, a radial floating glass tightening ring is mounted on the glass sealing holder, a quartz wool sealing layer wrapping an optical fiber preform is provided in the radial floating glass tightening ring, and an upper glass pressure ring is mounted at an upper end of the radial floating glass tightening ring.

According to a preferred embodiment, the radial floating glass tightening ring includes two to four glass arc blocks, clamping grooves are formed in peripheral faces of the glass arc blocks, and the glass arc blocks are circumferentially spliced into a ring shape, clamp an annular spring through the clamping grooves, and encircle a periphery of the quartz wool sealing layer to constitute the radial floating glass tightening ring.

According to a preferred embodiment, the metal gas intake ring communicates with a protective gas source through joint pipes and a control valve to make a protective gas enter the annular gas intake cavity.

According to a preferred embodiment, cooling water tanks are provided in the metal flange and the metal gas intake ring, respectively.

The technical solution of an optical fiber drawing method of the present invention is as follows. The above drawing furnace is used to make an optical fiber preform clamped on an ascending and descending feeding support device pass into an upper furnace mouth of the drawing furnace through a furnace mouth sealing device and a protective gas ring structure to enter a furnace cavity, a protective gas is turned on to enter the furnace cavity via the protective gas ring structure, a heating coil is turned on to heat a graphite center pipe, and the optical fiber preform is drawn into an optical fiber through high-temperature melting in a case that an interior of the drawing furnace is heated to 1700°C or above.

According to a preferred embodiment, the protective gas has a gas flow of 20-40 L/min, and is helium or argon.

According to a preferred embodiment, the optical fiber preform has an outer diameter of 120-240 mm.

According to a preferred embodiment, a fluctuation quantity (a difference between a maximum outer diameter and a minimum outer diameter) of an outer diameter of each optical fiber preform is less than 20 mm, and further, the fluctuation quantity is less than 40 mm.

According to a preferred embodiment, the optical fiber preform has a feeding speed of 0.5-2 mm/min, and a maximum drawing speed is 3500 m/min.

The present invention has the following beneficial effects. 1. The provision of the graphite-glass composite gas ring can effectively avoid the graphite gas ring from being in contact with air and oxidizing and thus greatly prolong the service life of the graphite gas ring, which not only reduces the impact on the optical fiber drawing quality caused by the burning of the graphite piece, but also prolongs the life of the graphite piece and saves the equipment maintenance cost. 2. The furnace mouth sealing device not only improves the dynamic sealing performance of the drawing furnace for the glass ring quartz wool floating sealing device, but also can ensure a good sealing effect when the outer diameter of the preform fluctuates. 3. The protective gas enters the annular gas intake cavity first from the metal gas intake ring to be uniformly mixed and preheated, and then enters the annular gas gap between the graphite gas ring and the insertion-type glass gas guide ring through the circumferentially distributed gas intake holes in the upper end of the graphite gas ring to form the protective gas ring layer that rotates downwards and wraps the optical fiber preform, which can reduce the flow speed of the protective gas into the furnace to make the protective gas to uniformly and gently flow into the furnace through the annular gas gap and form a uniform and gentle gas flow layer in the furnace. Therefore, when the protective gas enters the furnace, the gas holes will not directly face the preform, thereby avoiding a gas flow from directly scouring the preform. Since the high-temperature surface of the preform will wrinkle when suddenly encountering a cold gas flow, which will affect the strength and roundness of the optical fiber, the protective gas entering the furnace is downwards guided in the annular gas gap between the graphite gas ring and the insertion-type glass gas guide ring and then enters an area of the preform to fill the entire furnace, which not only preheats the protective gas that just enters to reduce a temperature difference between the protective gas and the preform, but also uniformly mixes the protective gas to form a protective gas ring to provide a stable and good machining condition for melting and drawing of the optical fiber preform, thereby further improving the drawing quality of the optical fiber. 4. According to the present invention, the structural configuration is reasonable, by using a glass piece structure and a cooling water tank structure of a metal piece, a sealing mouth of the drawing furnace has high-high-temperature resistance, less deformation and high work reliability, and the optical fiber drawing furnace is low in machining cost and particularly suitable for drawing machining of a large-diameter optical fiber preform.

### BRIEF DESCRIPTION OF THE DRAWINGS

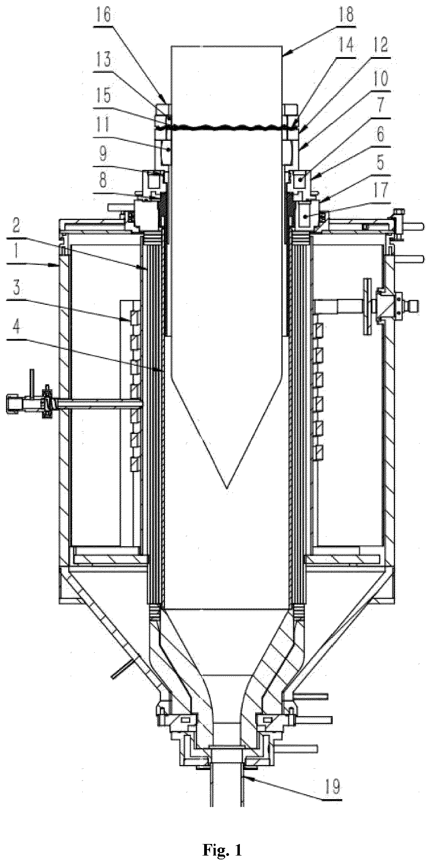

Fig. 1 is a front sectional structure view of an embodiment of the present invention.

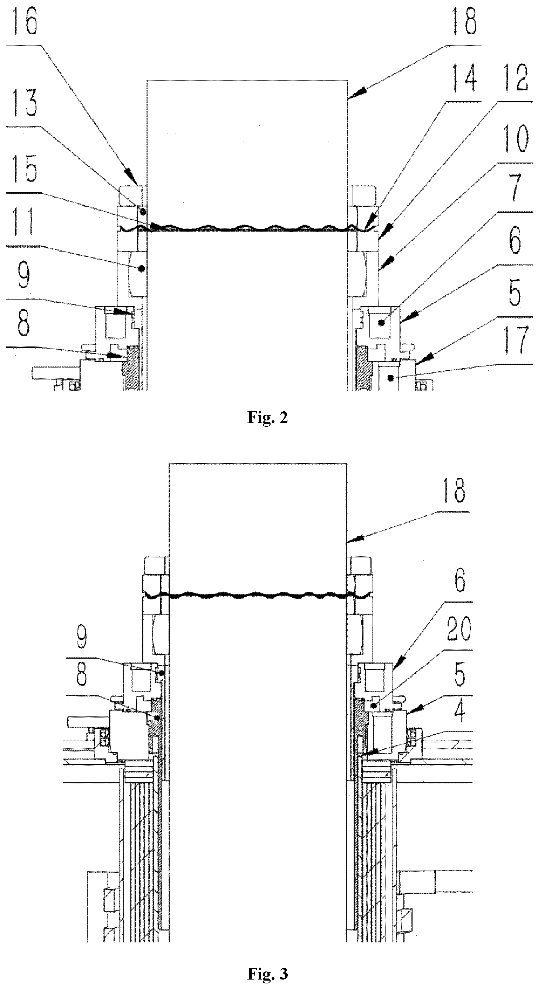

Fig. 2 is a front sectional structure view of the part of a glass ring quartz wool floating sealing device in an embodiment of the present invention.
Fig. 3 is a front sectional structure view of the part of a graphite-glass composite gas ring in an embodiment of the present invention.

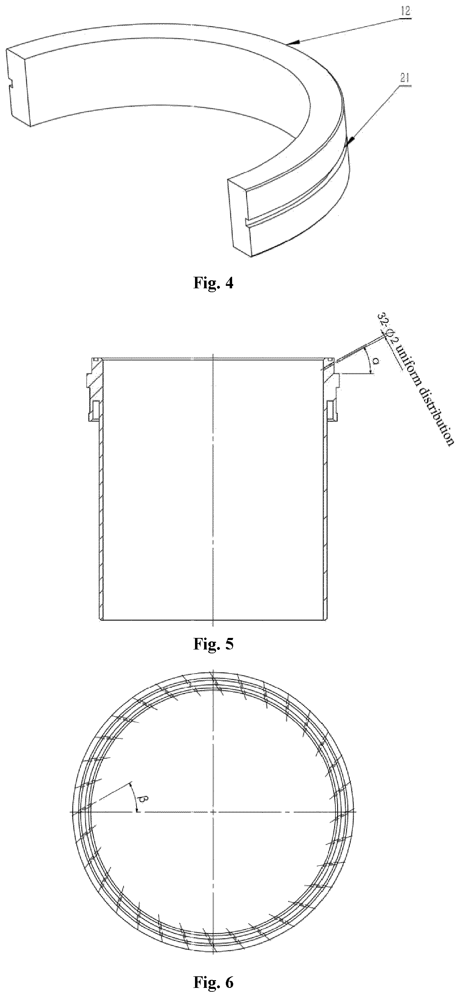

Fig. 4 is a stereostructure view of a glass arc block in an embodiment of the present invention.
Fig. 5 is a front sectional structure view of a graphite gas ring in an embodiment of the present invention.
Fig. 6 is a top view of a structure of Fig. 5.

### DETAILED DESCRIPTION

The embodiments of the present invention will be further illustrated below in conjunction with the drawings.

A barrel-shaped furnace body 1 is included. An up-down through cylindrical graphite center pipe 4 is mounted in a middle of the furnace body. An insulating layer 2 and a heating coil 3 are provided on a periphery of the graphite center pipe for induction heating and insulation of the graphite center pipe. An upper end of the graphite center pipe is connected to an upper furnace mouth, and a lower end of the graphite center pipe is connected to a downwards-shrinking lower furnace mouth 19. A protective gas ring structure is mounted on the upper furnace mouth. The protective gas ring structure includes a metal flange 5 mounted on the upper furnace mouth. An upper end of the metal flange is equipped with a metal gas intake ring 6. An upper end face of the metal flange is provided with an annular concave cavity, which fits with an annular boss on a lower end face of the metal gas intake ring. Cooling water tanks 17, 7 are provided in the metal flange and the metal gas intake ring, respectively. An annular gas intake cavity 20 is formed between the metal flange and an inner cavity below the metal gas intake ring. The metal gas intake ring communicates with a protective gas source through joint pipes and a control valve to make a protective gas enter the annular gas intake cavity. A graphite-glass composite gas ring is mounted on inner faces of the metal flange and the metal gas intake ring opposite to the annular gas intake cavity. The graphite-glass composite gas ring includes a graphite gas ring 8 in close fit with an inner hole of the metal flange. Circumferentially and uniformly spaced radial gas intake holes are formed in a periphery of an upper end of the graphite gas ring corresponding to the annular gas intake cavity. The radial gas intake holes are downwards tilting and radially deflecting gas intake holes, with a downwards tilting angle α of 25° and a radially deflecting angle β(towards the left) of 30°. The radial gas intake holes have a hole diameter of 2 mm. The number of the circumferentially and uniformly distributed gas intake holes is 32. A protective gas layer that rotates downwards and wraps an optical fiber preform 18 is formed during gas intake. A lower end of the graphite gas ring downwards extends by a distance, with an axial direction being staggered with the graphite center pipe and a periphery fitting with a graphite center pipe inner hole. An insertion-type glass gas guide ring 9 is equipped in an inner hole of the graphite gas ring corresponding to the radial gas intake holes, and a periphery of an upper end of the insertion-type glass gas guide ring fits with an inner face of an upper end of the metal gas intake ring. A peripheral face of the insertion-type glass gas guide ring maintains a gap of 0.5-2 mm with the inner hole of the graphite gas ring and downwards extends by a distance to form an annular gas gap. A protective gas sprayed out from the circumferentially distributed gas intake holes in the upper end of the graphite gas ring enters the annular gas gap between the graphite gas ring and the insertion-type glass gas guide ring to form a protective gas ring layer that rotates downwards and wraps the optical fiber preform. The protective gas is inert gas. A furnace mouth sealing device is equipped on the protective gas ring structure. The furnace mouth sealing device is a glass ring quartz wool floating sealing device. The glass ring quartz wool floating sealing device includes an annular glass sealing holder 10 mounted at an upper end of the metal gas intake ring. An annular boss on a lower end face of the glass sealing holder fits with an annular concave cavity provided in an upper end face of the metal gas intake ring. An annular sealing groove provided in an inner hole of the glass sealing holder is filled with a sealing quartz wool 11 to constitute a secondary seal for the optical fiber preform. A radial floating glass tightening ring 12 is mounted on the glass sealing holder. The radial floating glass tightening ring includes two glass arc blocks, which have a semicircle shape or a near-semicircle shape. Clamping grooves 21 are formed in peripheral faces of the glass arc blocks. The two glass arc blocks are circumferentially spliced into a ring shape, clamp an annular spring 14 through the clamping grooves, and encircle a periphery of the quartz wool sealing layer 13 to constitute the radial floating glass tightening ring. A quartz wool sealing layer that wraps the optical fiber preform is provided in the radial floating glass tightening ring, the quartz wool sealing layer may be bundled through a quartz rope 15, and an upper glass pressure ring 16 is mounted at an upper end of the radial floating glass tightening ring, whereby constituting a primary seal for the optical fiber preform. When the outer diameter of the optical fiber preform fluctuates, the radial floating glass tightening ring will tighten or loosen the quartz wool sealing layer under the action of the annular spring to make the quartz wool sealing layer always tightly wrap the optical fiber preform, thereby ensuring axial feeding dynamic sealing during drawing of the optical fiber preform.

The above drawing furnace is used to make the optical fiber preform clamped on an ascending and descending feeding support device pass into the upper furnace mouth of the drawing furnace through the furnace mouth sealing device and the protective gas ring structure to enter a furnace cavity, the protective gas is turned on to enter the furnace cavity via the protective gas ring structure, the heating coil is turned on to heat the graphite center pipe, and the optical fiber preform is drawn into an optical fiber through high-temperature melting in a case that an interior of the drawing furnace is heated to 1950°C or so. During working, the protective gas has a gas flow of 30 L/min, and the protective gas is helium or argon. The optical fiber preform has an outer diameter of 220 mm. A fluctuation quantity (a difference between a maximum outer diameter and a minimum outer diameter) of an outer diameter of each optical fiber preform is 30 mm. The optical fiber preform has a feeding speed of 1.6 mm/min. The drawing speed is 3500 m/min. ring structure to enter a furnace cavity, the protective gas is turned on to enter the furnace cavity via the protective gas ring structure, the heating coil is turned on to heat the graphite center pipe, and the optical fiber preform is drawn into an optical fiber through high-temperature melting in a case that an interior of the drawing furnace is heated to 1950°C or so. During working, the protective gas has a gas flow of 30 L/min, and the protective gas is helium or argon. The optical fiber preform has an outer diameter of 220 mm. A fluctuation quantity (a difference between a maximum outer diameter and a minimum outer diameter) of an outer diameter of each optical fiber preform is 30 mm. The optical fiber preform has a feeding speed of 1.6 mm/min. The drawing speed is 3500 m/min.

## Claims

1. An optical fiber drawing furnace, comprising a furnace body (1), an up-down through graphite center pipe (4) being mounted in a middle of the furnace body, an insulating layer (2) and a heating coil (3) being provided on a periphery of the graphite center pipe, an upper end of the graphite center pipe being connected to an upper furnace mouth, a lower end of the graphite center pipe being connected to a downwards-shrinking lower furnace mouth (19), a protective gas ring structure being mounted on the upper furnace mouth, a furnace mouth sealing device being equipped on the protective gas ring structure, **characterized in that** the protective gas ring structure comprises a metal flange (5) mounted on the upper furnace mouth, an upper end of the metal flange is equipped with a metal gas intake ring (6), an annular gas intake cavity (20) is formed between the metal flange and the metal gas intake ring, and a graphite-glass composite gas ring is mounted on inner faces of the metal flange and the metal gas intake ring opposite to the annular gas intake cavity, wherein the graphite-glass composite gas ring comprises a graphite gas ring (8) in close fit with an inner hole of the metal flange, circumferentially spaced radial gas intake holes are formed in a periphery of an upper end of the graphite gas ring corresponding to the annular gas intake cavity, an insertion-type glass gas guide ring (9) is equipped in an inner hole of the graphite gas ring corresponding to the radial gas intake holes, and a periphery of an upper end of the insertion-type glass gas guide ring fits with an inner face of an upper end of the metal gas intake ring.

2. The optical fiber drawing furnace according to claim 1, **characterized in that** the furnace mouth sealing device is a glass ring quartz wool floating sealing device.

3. The optical fiber drawing furnace according to claim 1, **characterized in that** a peripheral face of the insertion-type glass gas guide ring maintains a gap with the inner hole of the graphite gas ring and downwards extends by a distance to form an annular gas gap.

4. The optical fiber drawing furnace according to claim 1, **characterized in that** circumferentially and uniformly spaced radial gas intake holes are formed in the periphery of the upper end of the graphite gas ring, the radial gas intake holes are downwards tilting and radially deflecting gas intake holes, and a protective gas layer that rotates downwards and wraps an optical fiber preform is formed during gas intake.

5. The optical fiber drawing furnace according to claim 4, **characterized in that** the radial gas intake holes downwards tilt by an angle α of 10°-40° and radially deflect by an angle β of 15°-45°.

6. The optical fiber drawing furnace according to claim 4 or 5, **characterized in that** the radial gas intake holes have a hole diameter of 1.5-3 mm, and a number of the circumferentially and uniformly distributed gas intake holes is 20-50.

7. The optical fiber drawing furnace according to claim 1, **characterized in that** a lower end of the graphite gas ring downwards extends by a distance, with an axial direction being staggered with the graphite center pipe and a periphery fitting with an inner hole of the graphite center pipe.

8. The optical fiber drawing furnace according to claim 2, **characterized in that** the glass ring quartz wool floating sealing device comprises a glass sealing holder (10) mounted at an upper end of the metal gas intake ring, an annular sealing groove provided in an inner hole of the glass sealing holder is filled with a sealing quartz wool (11), a radial floating glass tightening ring (12) is mounted on the glass sealing holder, a quartz wool sealing layer (13) wrapping an optical fiber preform is provided in the radial floating glass tightening ring, and an upper glass pressure ring (16) is mounted at an upper end of the radial floating glass tightening ring.

9. The optical fiber drawing furnace according to claim 8, **characterized in that** the radial floating glass tightening ring (12) comprises two to four glass arc blocks, clamping grooves (21) are formed in peripheral faces of the glass arc blocks, and the glass arc blocks are circumferentially spliced into a ring shape, clamp an annular spring (14) through the clamping grooves, and encircle a periphery of the quartz wool sealing layer (13) to constitute the radial floating glass tightening ring.

10. The optical fiber drawing furnace according to claim 1 or 2, **characterized in that** the metal gas intake ring communicates with a protective gas source through joint pipes and a control valve to make a protective gas enter the annular gas intake cavity.

11. The optical fiber drawing furnace according to claim 1 or 2, **characterized in that** cooling water tanks (17), (7) are provided in the metal flange (5) and the metal gas intake ring (6), respectively.

12. An optical fiber drawing method, **characterized by** using the optical fiber drawing furnace according to any one of claims 1-11 to make an optical fiber preform clamped on an ascending and descending feeding support device pass into an upper furnace mouth of the optical fiber drawing furnace through the furnace mouth sealing device and the protective gas ring structure to enter a furnace cavity, turning on a protective gas to enter the furnace cavity via the protective gas ring structure, turning on the heating coil to heat the graphite center pipe, and drawing the optical fiber preform into an optical fiber through high-temperature melting in a case that an interior of the optical fiber drawing furnace is heated to 1700°C or above.

13. The optical fiber drawing method according to claim 12, **characterized in that** the protective gas has a gas flow of 20-40 L/min, and the protective gas is helium or argon.

14. The optical fiber drawing method according to claim 12, **characterized in that** the optical fiber preform has a feeding speed of 0.5-2 mm/min, and a maximum drawing speed is 3500 m/min.

## Patentansprüche

1. Glasfaserziehofen, umfassend ein Ofengehäuse (1), ein Graphit-Zentorohr (4) mit Durchgang von oben nach unten, das in einer Mitte des Ofengehäuses montiert ist, eine Isolierschicht (2) und eine Heizspule (3), die auf einem Umfang des Graphit-Zentorohrs bereitgestellt sind, wobei ein oberes Ende des Graphit-Zentorohrs mit einer oberen Ofenöffnung verbunden ist, ein unteres Ende des Graphit-Zentorohrs mit einer nach unten verjüngten unteren Ofenöffnung (19) verbunden ist, eine Schutzgasringstruktur auf der oberen Ofenöffnung montiert ist, die Schutzgasringstruktur mit einer Ofenöffnungsdichtungsvorrichtung ausgestattet ist, **dadurch gekennzeichnet, dass** die Schutzgasringstruktur einen Metallflansch (5) umfasst, der auf der oberen Ofenöffnung montiert ist, ein oberes Ende des Metallflanschs mit einem Gaszufuhr-Metallring (6) ausgestattet ist, ein ringförmiger Gaszufuhrhohlraum (20) zwischen dem Metallflansch und dem Gaszufuhr-Metallring gebildet ist und ein Graphit-Glas-Verbund-Gasring auf inneren Seitenflächen des Metallflansches und des Gaszufuhr-Metallrings entgegengesetzt zum ringförmigen Gaszufuhrhohlraum montiert sind, wobei der Graphit-Glas-Verbund-Gasring einen Graphit-Gasring (8) umfasst, der passgenau mit einem inneren Loch des Metallflanschs ausgeführt ist, umfangseitig beabstandete radiale Gaszufuhrlöcher in einem Umfang eines oberen Endes des Graphit-Gasrings entsprechend dem ringförmigen Gaszufuhrhohlraum ausgebildet sind, ein Glas-Gasführungsring vom Einfügetyp (9) in einem inneren Loch des Graphit-Gasrings entsprechend den radialen Gaszufuhrlöchern bereitgestellt ist und ein Umfang eines oberen Endes des Glas-Gasführungsrings vom Einfügetyp passend zu einer inneren Seitenfläche eines oberen Endes des Gaszufuhr-Metallrings ausgeformt ist.

2. Glasfaserziehofen nach Anspruch 1, **dadurch gekennzeichnet, dass** die Ofenöffnungsdichtungsvorrichtung eine Dichtungsvorrichtung mit Glasring und Quarz-Wolle in schwimmender Ausführung ist.

3. Glasfaserziehofen nach Anspruch 1, **dadurch gekennzeichnet, dass** eine Umfangsseite des Glas-Gasführungsrings vom Einfügetyp einen Spalt zum inneren Loch des Graphit-Gasrings beibehält und sich nach unten um einen Abstand erstreckt, um einen ringförmigen Gasspalt zu bilden.

4. Glasfaserziehofen nach Anspruch 1, **dadurch gekennzeichnet, dass** umfangseitig und gleichmäßig beabstandete radiale Gaszufuhrlöcher in dem Umfang des oberen Endes des Graphit-Gasrings ausgebildet sind, die radialen Gaszufuhrlöcher nach unten geneigte und radial abgelenkte Gaszufuhrlöcher sind und eine Schutzgasschicht, die sich nach unten dreht und eine Glasfaservorform umhüllt, während der Gaszufuhr gebildet wird.

5. Glasfaserziehofen nach Anspruch 4, **dadurch gekennzeichnet, dass** die radialen Gaszufuhrlöcher um einen Winkel α von 10°-40° nach unten geneigt und um einen Winkel β von 15°-45° radial abgelenkt sind.

6. Glasfaserziehofen nach Anspruch 4 oder 5, **dadurch gekennzeichnet, dass** die radialen Gaszufuhrlöcher einen Lochdurchmesser von 1,5-3 mm aufweisen und eine Anzahl der umfangseitig und gleichmäßig verteilten Gaszufuhrlöcher 20-50 beträgt.

7. Glasfaserziehofen nach Anspruch 1, **dadurch gekennzeichnet, dass** ein unteres Ende des Graphit-Gasrings sich um einen Abstand nach unten erstreckt, mit einer axialen Ausrichtung, die versetzt zum Graphit-Zentorohr liegt, und einem Umfang, der in ein inneres Loch des Graphit-Zentorohrs passt.

8. Glasfaserziehofen nach Anspruch 2, **dadurch gekennzeichnet, dass** die Dichtungsvorrichtung mit Glasring und Quarzwolle in schwimmender Ausführung einen Glasdichtungshalter (10) umfasst, der an einem oberen Ende des Gaszufuhr-Metallrings montiert ist, eine ringförmige Dichtungsnut, die in einem inneren Loch des Glasdichtungshalters bereitgestellt ist, mit einer dichtenden Quarzwolle (11) gefüllt ist, ein radialer schwimmender Spannring (12) auf dem Glasdichtungshalter montiert ist, eine Quarzwolle-Dichtungsschicht (13), die eine Glasfaservorform einhüllt, in dem radialen schwimmenden Spannring bereitgestellt ist und ein oberer Glasdruckring (16) an einem oberen Ende des radialen schwimmenden Glasspannrings montiert ist.

9. Glasfaserziehofen nach Anspruch 8, **dadurch gekennzeichnet, dass** der radiale schwimmende Glasspannring (12) zwei bis vier Glasbogenblöcke umfasst, Klemmnuten (21) in umfangseitigen Seitenflächen der Glasbogenblöcke ausgebildet sind und die Glasbogenblöcke umfangseitig zu einer Ringform zusammengesetzt sind, eine ringförmige Feder (14) durch die Klemmnuten klemmen und einen Umfang der Quarzwolle-Dichtungsschicht (13) umgeben, um den radialen schwimmenden Glasspannring darzustellen.

10. Glasfaserziehofen nach Anspruch 1 oder 2, **dadurch gekennzeichnet, dass** der Gaszufuhr-Metallring mit einer Schutzgasquelle durch zusammengefügte Rohre und ein Regelventil kommuniziert, um dafür zu sorgen, dass ein Schutzgas in den ringförmigen Gaszufuhrhohlraum einströmt.

11. Glasfaserziehofen nach Anspruch 1 oder 2, **dadurch gekennzeichnet, dass** Kühlwasserbehälter (17), (7) jeweils in dem Metallflansch (5) und dem Gaszufuhr-Metallring (6) bereitgestellt sind.

12. Glasfaserziehverfahren, **dadurch gekennzeichnet, dass** der Glasfaserziehofen nach einem der Ansprüche 1-11 genutzt wird, um dafür zu sorgen, dass eine Glasfaservorform, die auf einer aufsteigenden und absteigenden Zuführungsstützvorrichtung geklemmt ist, in eine obere Ofenöffnung des Glasfaserziehofens durch die Ofenöffnungsdichtungsvorrichtung geführt wird und die Schutzgasringstruktur in einen Ofenhohlraum eintritt, wobei ein Schutzgas eingeschaltet wird, um über die Schutzgasringstruktur in den Ofenhohlraum zu strömen, wobei die Heizspule eingeschaltet wird, um das Graphit-Zentorohr zu beheizen, und wobei die Glasfaservorform durch Hochtemperaturschmelzen in eine Glasfaser gezogen wird, wenn ein Innenraum des Glasfaserziehofens auf 1700 °C oder mehr erhitzt wird.

13. Glasfaserziehverfahren nach Anspruch 12, **dadurch gekennzeichnet, dass** das Schutzgas einen Gasstrom von 20-40 l/min aufweist und das Schutzgas Helium oder Argon ist.

14. Glasfaserziehverfahren nach Anspruch 12, **dadurch gekennzeichnet, dass** die Glasfaservorform eine Zuführgeschwindigkeit von 0,5-2 mm/min aufweist und eine maximale Ziehgeschwindigkeit 3500 m/min beträgt.

## Revendications

1. Four d'étirage de fibre optique, comprenant un corps de four (1), un conduit central de graphite de haut en bas (4) étant monté au milieu du corps de four, une couche isolante (2) et une bobine de chauffage (3) étant ménagées sur une périphérie du conduit central de graphite, une extrémité supérieure du conduit central de graphite étant connectée à une embouchure de four supérieure, une extrémité inférieure du conduit central de graphite étant connectée à une embouchure de four inférieure rétrécissant vers le bas (19), une structure d'anneau de gaz protecteur étant montée sur l'embouchure de four supérieure, un dispositif d'étanchéité d'embouchure de four étant équipé sur la structure d'anneau de gaz protecteur, **caractérisé en ce que** la structure d'anneau de gaz protecteur comprend une bride métallique (5) montée sur l'embouchure de four supérieure, une extrémité supérieure de la bride métallique est équipée d'un anneau d'admission de gaz métallique (6), une cavité d'admission de gaz annulaire (20) est formée entre la bride métallique et l'anneau d'admission de gaz métallique, et un anneau de gaz composite graphite-verre est monté sur des faces internes de la bride métallique et de l'anneau d'admission de gaz métallique opposé à la cavité d'admission de gaz annulaire, dans lequel l'anneau de gaz composite graphite-verre comprend un anneau de gaz de graphite (8) en ajustement serré avec un trou interne de la bride métallique, des trous d'admission de gaz radiaux espacés de manière circonférentielle sont formés dans une périphérie d'une extrémité supérieure de l'anneau de gaz de graphite correspondant à la cavité d'admission de gaz annulaire, un anneau de guidage de gaz de verre de type à insertion (9) est équipé dans un trou interne de l'anneau de gaz de graphite correspondant aux trous d'admission de gaz radiaux, et une périphérie d'une extrémité supérieure de l'anneau de guidage de gaz de verre de type à insertion s'ajuste avec une face interne d'une extrémité supérieure de l'anneau d'admission de gaz métallique.

2. Four d'étirage de fibre optique selon la revendication 1, **caractérisé en ce que** le dispositif d'étanchéité d'embouchure de four est un dispositif d'étanchéité flottant en laine de quartz à anneau de verre.

3. Four d'étirage de fibre optique selon la revendication 1, **caractérisé en ce qu'**une face périphérique de l'anneau de guidage de gaz de verre de type à insertion maintient un espace avec le trou interne de l'anneau de gaz de graphite et s'étend vers le bas d'une distance pour former un espace de gaz annulaire.

4. Four d'étirage de fibre optique selon la revendication 1, **caractérisé en ce que** des trous d'admission de gaz radiaux espacés de manière circonférentielle et uniforme sont formés dans la périphérie de l'extrémité supérieure de la bague de gaz de graphite, les trous d'admission de gaz radiaux sont des trous d'admission de gaz inclinés vers le bas et déviés radialement, et une couche de gaz protecteur qui tourne vers le bas et enveloppe une préforme de fibre optique est formée pendant l'admission de gaz.

5. Four d'étirage de fibre optique selon la revendication 4, **caractérisé en ce que** les trous d'admission de gaz radiaux sont inclinés vers le bas d'un angle α de 10°-40° et sont déviés radialement d'un angle β de 15°-45°.

6. Four d'étirage de fibre optique selon la revendication 4 ou 5, **caractérisé en ce que** les trous d'admission de gaz radiaux présentent un diamètre de trou de 1,5-3 mm, et un nombre des trous d'admission de gaz répartis de manière circonférentielle et uniforme est de 20-50.

7. Four d'étirage de fibre optique selon la revendication 1, **caractérisé en ce qu'**une extrémité inférieure de l'anneau de gaz de graphite s'étend vers le bas d'une distance, avec une direction axiale échelonnée par rapport au conduit central de graphite et une périphérie s'ajustant avec un trou interne du conduit central de graphite.

8. Four d'étirage de fibre optique selon la revendication 2, **caractérisé en ce que** le dispositif d'étanchéité flottant en laine de quartz à anneau de verre comprend un support d'étanchéité en verre (10) monté au niveau d'une extrémité supérieure de l'anneau d'admission de gaz métallique, une rainure d'étanchéité annulaire ménagée dans un trou interne du support d'étanchéité en verre est remplie d'une laine de quartz d'étanchéité (11), un anneau de serrage en verre flottant radial (12) est monté sur le support d'étanchéité en verre, une couche d'étanchéité en laine de quartz (13) enveloppant une préforme de fibre optique est ménagée dans l'anneau de serrage en verre flottant radial, et un anneau de pression en verre supérieur (16) est monté au niveau d'une extrémité supérieure de l'anneau de serrage en verre flottant radial.

9. Four d'étirage de fibre optique selon la revendication 8, **caractérisé en ce que** l'anneau de serrage en verre flottant radial (12) comprend deux à quatre blocs de verre en arc, des rainures de serrage (21) sont formées dans des faces périphériques des blocs de verre en arc, et les blocs de verre en arc sont épissés de manière circonférentielle en une forme d'anneau, serrent un ressort annulaire (14) à travers les rainures de serrage, et encerclent une périphérie de la couche d'étanchéité à laine de quartz (13) pour constituer l'anneau de serrage en verre flottant radial.

10. Four d'étirage de fibre optique selon la revendication 1 ou 2, **caractérisé en ce que** l'anneau d'admission de gaz métallique communique avec une source de gaz protecteur à travers des conduits de branchement et une vanne de régulation pour amener un gaz protecteur à entrer dans la cavité d'admission de gaz annulaire.

11. Four d'étirage de fibre optique selon la revendication 1 ou 2, **caractérisé en ce que** des réservoirs d'eau de refroidissement (17), (7) sont ménagés dans la bride métallique (5) et l'anneau d'admission de gaz métallique (6), respectivement.

12. Procédé d'étirage de fibre optique, **caractérisé par** l'utilisation du four d'étirage de fibre optique selon l'une quelconque des revendications 1-11 pour amener une préforme de fibre optique serrée sur un dispositif de support d'alimentation ascendant et descendant à passer dans une embouchure de four supérieure du four d'étirage de fibre optique à travers le dispositif d'étanchéité d'embouchure de four et la structure d'anneau de gaz protecteur pour entrer dans une cavité de four, par l'activation d'un gaz protecteur pour entrer dans la cavité de four via la structure d'anneau de gaz protecteur, par l'activation de la bobine chauffante pour chauffer le conduit central de graphite, et par l'étirage de la préforme de fibre optique dans une fibre optique par fusion à haute température dans un cas où un intérieur du four d'étirage de fibre optique est chauffé à 1700°C ou plus.

13. Procédé d'étirage de fibre optique selon la revendication 12, **caractérisé en ce que** le gaz protecteur présente un débit de gaz de 20-40 L/min, et le gaz protecteur est de l'hélium ou de l'argon.

14. Procédé d'étirage de fibre optique selon la revendication 12, **caractérisé en ce que** la préforme de fibre optique présente une vitesse d'alimentation de 0,5-2 mm/min, et une vitesse d'étirage maximale est de 3500 m/min.
